Europäisches Patentamt

**European Patent Office**

**Office européen des brevets**

(19)

(11) **EP 1 058 988 B1**

(12) **EUROPÄISCHE PATENTSCHRIFT**

(45) Veröffentlichungstag und Bekanntmachung des Hinweises auf die Patenterteilung:
**01.12.2004 Patentblatt 2004/49**

(21) Anmeldenummer: **99959217.3**

(22) Anmeldetag: **21.10.1999**

(51) Int Cl.7: **H04L 27/14**

(86) Internationale Anmeldenummer:
**PCT/DE1999/003372**

(87) Internationale Veröffentlichungsnummer:
**WO 2000/039975 (06.07.2000 Gazette 2000/27)**

(54) **VERFAHREN UND SCHALTUNGSANORDNUNG ZUR DEMODULATION EINES DIGITALEN FREQUENZMODULIERTEN SIGNALS**

METHOD AND CIRCUIT FOR DEMODULATING A DIGITAL FREQUENCY-MODULATED SIGNAL

PROCEDE ET CIRCUIT POUR LA DEMODULATION D'UN SIGNAL NUMERIQUE MODULE EN FREQUENCE

(84) Benannte Vertragsstaaten:
**DE FR GB IT SE**

(30) Priorität: **28.12.1998 DE 19860402**

(43) Veröffentlichungstag der Anmeldung:
**13.12.2000 Patentblatt 2000/50**

(73) Patentinhaber: **ROBERT BOSCH GMBH**
**70442 Stuttgart (DE)**

(72) Erfinder:
• **JELONNEK, Bjoern**
**D-89079 Ulm (DE)**

• **VOGT, Lothar**
**D-31199 Barienrode (DE)**

(56) Entgegenhaltungen:
**US-A- 4 309 772**

• **CHEN A ET AL: "REDUCED COMPLEXITY CORDIC DEMODULATOR IMPLEMENTATION FOR D-AMPS AND DIGITAL IF-SAMPLED RECEIVER" IEEE GLOBAL TELECOMMUNICATIONS CONFERENCE,US,NEW YORK, NY: IEEE,1998, Seiten 1491-1496, XP000805159 ISBN: 0-7803-4985-7**

EP 1 058 988 B1

**Beschreibung**

Die Erfindung betrifft ein Verfahren und eine Schaltungsanordnung zur Demodulation eines digitalen frequenzmodulierten Signals zur Signalverbesserung im kleinen Signalbereich.

Es sind zahlreiche Verfahren zur digitalen Demodulation eines frequenzmodulierten (FM)-Signals bekannt, zum Beispiel der CORDIC-Algorithmus. Diese Demodulatoren weisen das Problem auf, daß das Signal-Rauschverhältnis am Demodulatorausgang überproportional abnimmt, wenn der Signal-Rauschabstand des Eingangssignals eine gewisse Schwelle unterschreitet. Diese Schwelle wird üblicherweise FM-Schwelle genannt. Dieser kritische Punkt ist ungefähr dann erreicht, wenn die Rauschamplitude die Größenordnung der Signalamplitude hat. Dann kommt es zu Phasensprüngen im demodulierten Signal.

Es war daher Aufgabe der Erfindung, ein Verfahren und eine Schaltungsanordnung zur digitalen Demodulation eines frequenzmodulierten Signals zu schaffen, mit dem die vorstehend genannten Nachteile weitgehend vermieden und der FM-Empfang verbessert wird.

Die Aufgabe wird durch das Verfahren gemäß Patentanspruch 1 gelöst, indem nach dem Demodulieren des digitalisierten frequenzmodulierten Signals zum Erzeugen der Amplidute A(n) und des differentiellen Phasenwertes φ'(n) des Signals die Schritte ausgeführt werden von:

- Vergleichen der Amplitude A(n) des demodulierten Signals zu festgelegten Abtastzeitpunkten n mit einem Konstanten K,

- Multiplizieren des differentiellen Phasenwertes φ(n) des jeweiligen Abtastzeitpunktes n mit einem Faktor c, wobei der Faktor c das Produkt aus der Amplitude A(n) des festgelegten Abtastzeitpunktes und der Amplitude A(n-1) eines vorhergehenden Abtastzeitpunktes ist, wenn die Amplitude A(n) kleiner als die Konstante K ist.

Erfindungsgemäß wird somit am Demodulatorausgang der aktuelle Amplitudenwert A(n) zusätzlich bereitgestellt und das frequenzmodulierte Signal mit diesem Amplitudenwert modifiziert. Die Signalkorrektur erfolgt jedoch nur dann, wenn die Signalamplitude einen bestimmten Wert unterschreitet, so daß die impulsartigen Spitzen im Signal reduziert werden. Es hat sich herausgestellt, daß bei der Signalkorrektur vorteilhafterweise ein vorhergehender Amplitudenwert mit berücksichtigt und das zu korrigierende Demodulatorausgangssignal, nämlich die differentielle Phase φ(n), mit dem Produkt aus dem Amplitudenwert A(n) und dem vorhergehenden Amplitudenwert A(n-1) multipliziert werden sollte.

Wenn der Amplitudenwert A(n) größer oder gleich der gewählten Konstante K ist sollte der Faktor gleich 1 sein, so daß das Demodulatorausgangssignal unverändert bleibt.

Das Verfahren sollte vorteilhafterweise kontinuierlich durchgeführt werden, wobei das Vergleichen der Amplitude A(n) mit der Konstanten K und die Multiplikation des Demodulatorausgangssignals mit dem entsprechenden Faktor c zu jedem Abtastzeitpunkt n erfolgt. Dann ist es ratsam, daß der zu berücksichtigende vorhergehende Amplitudenwert A(n-1) der dem aktuellen Amplitudenwert A(n) unmittelbar vorhergehende Amplitudenwert A(n-1) ist.

Das Verfahren ist insbesondere für FM-Empfänger geeignet, wobei vor dem Demodulieren des digitalen frequenzmodulierten Signals die Schritte erfolgen von:

- Umwandeln eines analogen Hochfrequenzsignals in ein digitales Signal,

- Abmischen des digitalen Signals in ein Basisband,

- Filtern des Basisband-Signals.

Die erfindungsgemäße Schaltungsanordnung hat entsprechend

- einen Verzögerer an dem Ausgang des Demodulators für den digitalen Amplitudenwert A(n),

- einen Vergleicher an dem Ausgang des Demodulators und des Verzögerers zum Vergleichen des aktuellen Amplitudenwertes A(n) mit einer Konstanten K,

- einen Multiplizierer zum Bilden des Produktes aus dem aktuellen Amplitudenwert A(n) mit einem vorhergehenden Amplitudenwert A(n-1), wobei ein Faktor c gleich dem Produkt ist, wenn der aktuelle Amplitudenwert A(n) kleiner als die Konstante K ist,

- einen Multiplizierer für das differentielle Phasensignal φ'(n) mit dem Faktor c, zum Erzeugen eines das demodulierten Ausgangssignals MPX.

Der Verzögerer ist vorteilhafterweise so ausgebildet, daß das Produkt aus dem aktuellen Amplitudenwert A(n) und dem unmittelbar vorhergehenden Amplidutenwert A(n-1) gebildet wird.

Wenn der aktuelle Amplitudenwert A(n) größer oder gleich der Konstanten K ist, sollte der Faktor c gleich 1 eingestellt werden.

Die Erfindung ist nachfolgend anhand der beigefügten Zeichnung näher erläutert. Es zeigt:

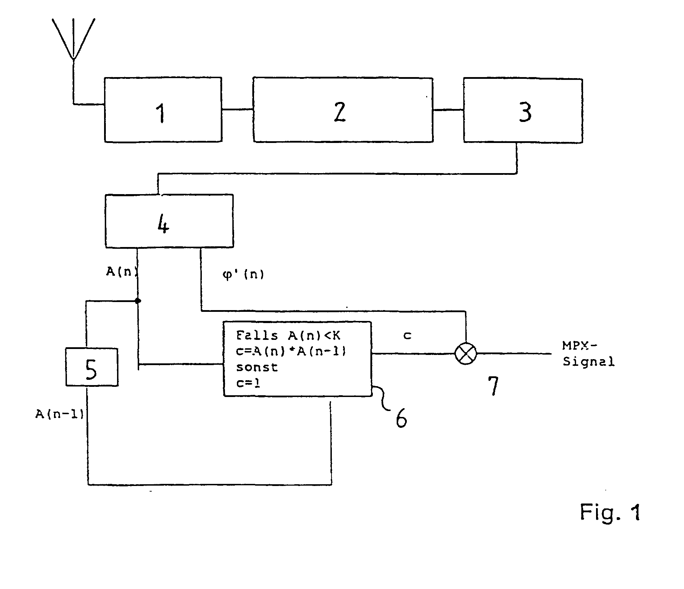

Figur 1 - ein Blockdiagramm der Schaltungsanordnung zur digitalen Demodulation eines frequenzmodulierten Signals.

Zum Empfang eines frequenzmodulierten Signals ist ein Hochfrequenzempfangsbaustein (1) an einer Antenne gekoppelt. Am Ausgang des Hochfrequenz-Empfangsbausteins (1) ist eine Einheit (2) mit einem Analog-Digital-Wandler zum Umwandeln des analogen Hochfrequenzsignals in ein digitales Signal und ein Mischer zum Abmischen des digitalen Signals in das Basisband vorgesehen. Das resultierende digitale Basisband-Signal wird mit einem Filter (3) vorzugsweise tiefpaßgefiltert und in einen Demodulator (4) geleitet. In dem Demodulator wird das gefilterte Basisband-Signal mit bekannten Verfahren demoduliert.

Das Eingangssignal des Demodulators (4) kann durch zwei orthogonal zueinander stehenden Signalkomponenten (x) und (y) beschrieben werden:

$$x(n) = a(n) * \cos(s(n)) + r1(n) =: A(n) * \cos(\varphi(n)),$$

$$y(n) = a(n) * \sin(s(n)) + r2(n) =: A(n) * \sin(\varphi(n)).$$

Hierbei bedeuten:

a(n): Amplitude zum n-ten Abtastzeitpunkt
s(n): Modulation zum n-ten Abtastzeitpunkt
r1(n): Realteil der Rauschkomponente zum n-ten Abtastzeitpunkt
r2(n): Imaginärteil der Rauschkomponente zum n-ten Abtastzeitpunkt
A(n): Amplitudenwert zum n-ten Abtastzeitpunkt
$\varphi(n)$: Phasenwert zum n-ten Abtastzeitpunkt.

Der Demodulator (4) erzeugt als Demodulator-Ausgangssignal die differentielle Phase $\varphi'(n)$, das heißt die Ableitung des Phasenwertes $\varphi(n)$. Für große Signal-Rauschabstände sind die Rauschkomponenten r1(n) und r2(n) vernachlässigbar. Für die Ableitung der Modulation zum n-ten Abtastzeitpunkt s'(n) und die differentielle Phase $\varphi'(n)$ gilt dann:
$$s'(n) \approx \varphi'(n) \approx \varphi(n) - \varphi(n-1)$$

Aus den dargestellten Beziehungen wird deutlich, daß es zu Phasensprüngen im demodulierten Signal kommt, sobald die Rauschamplitude die Größenordnung der Signalamplitude erreicht.

Der Demodulator (4) hat einen zweiten Ausgang für die Amplituden A(n) des demodulierten Signals zu jedem Abtastzeitpunkt n. An diesem zweiten Ausgang ist ein Verzögerer (5) und weiterhin ein Vergleicher-Multiplizierelement (6) mit einem Vergleicher und einem Multiplizierer vorgesehen, um einen Faktor (c) als Produkt des aktuellen Amplitudenwertes a(n) mit dem verzögerten Amplitudenwert a(n-1) am Ausgang des Verzögerers (5) zu berechnen, wenn der aktuelle Amplitudenwert A(n) kleiner einer Konstanten ist. Der Ausgang dieses Vergleicher-Multipliziererelementes (6) ist an einen Multiplizierer (7) geschaltet, um das Demodulatorausgangssignal (MPX) als Produkt des errechneten Faktors (c) mit dem differentiellen Phasenwert $\varphi'(n)$ zu bilden. Wenn der Amplitudenwert A(n) größer oder gleich der Konstanten ist, wird der Ausgang des Vergleicher-Multipliziererelements auf logisch "1" gelegt. Dann ist das Demodulatorausgangssignal (MPX) gleich dem differentiellen Phasenwert $\varphi'(n)$. Durch die Korrektur des differentiellen Phasenwertes $\varphi'(n)$ bei kleinen Amplituden A(n) mittels Multiplikation mit dem aktuellen Amplitudenwert A(n) und dem unmittelbar vorhergehenden Amplitudenwert A(n-1) werdem impulsartige Spitzen im Demodulatorausgangssignal reduziert und der FM-Empfang verbessert, indem die Phasensprünge im demodulierten Signal kompensiert werden.

## Patentansprüche

1. Verfahren zur Demodulation eines digitalen frequenzmodulierten Signals mit den Schritten:

    a) Demodulieren des digitalisierten frequenzmodulierten Signals, wobei als Ausgangssignale die Amplitude (A(n)) und der differentielle Phasenwert ($\varphi'(n)$) des Signals erzeugt werden, **gekennzeichnet durch**

    b) Vergleichen der Amplitude (A (n)) des demodulierten Signals zu festgelegten Abtastzeitpunkten (n) mit einer Konstanten (K),

    c) Multiplizieren des differentiellen Phasenwertes ($\varphi'(n)$) des jeweiligen Abtastzeitpunktes mit einem Faktor (c), wobei der Faktor (c) das Produkt aus der Amplitude (A(n)) des festgelegten Abtastzeitpunktes und der Amplitude (A(n-1)) eines vorhergehenden Abtastzeitpunktes ist, wenn die Amplitude (A(n)) kleiner als die Konstante (K) ist.

2. Verfahren nach Anspruch 1, **dadurch gekennzeichnet, daß** der Faktor (c) gleich 1 ist, wenn die Amplitude (A(n)) größer oder gleich der Konstante (K) ist.

3. Verfahren nach Anspruch 1 oder 2, wobei die Schritte b) und c) zu jedem Abtastzeitpunkt durchgeführt werden.

4. Verfahren nach Anspruch 3, **dadurch gekennzeichnet, daß** der Faktor (c) als Produkt aus der Amplitude (A(n)) des Abtastzeitpunktes und der Amplitude (A(n-1)) des unmittelbar vorhergehenden Abtastzeitpunktes berechnet wird, wenn die Amplitude (A(n)) kleiner als die Konstante (K) ist.

5. Verfahren nach einem der vorhergehenden Ansprüche, wobei vor dem Demodulieren des digitalen frequenzmodulierten Signals die Schritte durchgeführt werden von:

- Umwandeln eines analogen Hochfrequenzsignals in ein digitales Signal,

- Abmischen des digitalen Signals in ein Basisband,

- Filtern des Basisbandsignals.

6. Schaltungsanordnung zur digitalen Demodulation eines frequenzmodulierten Signals mit einem Demodulator (4), wobei der Demodulator (4) einen Ausgang für die digitalen Amplitudenwerte (A(n)) und einen Ausgang für die differentiellen Phasenwerte ($\varphi'$(n)) hat, **gekennzeichnet durch**

- einen Verzögerer (5) an dem Ausgang des Demodulators (4) für den digitalen Amplitudenwert (A(n)),

- ein Vergleicher-Multipliziererelement (6) mit einem Vergleicher an dem Ausgang des Demodulators (4) und des Verzögerers (5) zum Vergleichen des aktuellen Amplitudenwertes (A(n)) mit einer Konstanten (K) und mit

- einem Multiplizierer zum Bilden des Produktes aus dem aktuellen Amplitudenwert (A(n)) mit einem vorhergehenden Amplitudenwert (A(n-1)), wobei ein Faktor (c) gleich dem Produkt ist, wenn der aktuelle Amplitudenwert (A(n)) kleiner als die Konstante (K) ist, und

- einen Multiplizierer (7) für das differentielle Phasensignal ($\varphi'$(n)) mit dem Faktor (c), zum Erzeugen eines demodulierten Ausgangssignals (MPX).

7. Schaltungsanordnung nach Anspruch 6, **dadurch gekennzeichnet, daß** der Verzögerer (5) so ausgebildet ist, daß das Produkt aus den aktuellen Amplitudenwert (A(n)) und dem unmittelbar vorhergehenden Amplitudenwert (A(n-1)) gebildet wird.

8. Schaltungsanordnung nach Anspruch 7, **dadurch gekennzeichnet, daß** der Faktor (c) gleich 1 ist, wenn der aktuelle Amplitudenwert (A(n)) größer oder gleich der Konstanten (K) ist.

9. Schaltungsanordnung nach einem der Ansprüche 6 bis 8, wobei vor dem Demodulator (4) ein Hochfrequenzempfangsbaustein (1), eine Einheit (2) mit einem Mischer und einem Analog-Digital-Wandler zur Digitalwandlung des frequenzmodulierten Signals, sowie ein Filter (3) für das digitale frequenzmodulierte Signal geschaltet ist.

**Claims**

1. Method for demodulating a digital frequency-modulated signal, having the following steps:

a) the digitized frequency-modulated signal is demodulated, the output signals produced being the amplitude (A(n)) and the differential phase value ($\varphi'$(n)) of the signal,

**characterized by**

b) comparison of the amplitude (A(n)) of the demodulated signal at stipulated sampling times (n) with a constant (K),

c) multiplication of the differential phase value ($\varphi'$(n)) of the respective sampling time by a factor (c), the factor (c) being the product of the amplitude (A(n)) of the stipulated sampling time and the amplitude (A(n-1)) of a preceding sampling time when the amplitude (A(n)) is less than the constant (K).

2. Method according to Claim 1, **characterized in that** the factor (c) is equal to 1 when the amplitude (A(n)) is greater than or equal to the constant (K).

3. Method according to Claim 1 or 2, where steps b) and c) are performed at each sampling time.

4. Method according to Claim 3, **characterized in that** the factor (c) is calculated as the product of the amplitude (A(n)) of the sampling time and the amplitude (A(n-1)) of the immediately preceding sampling time when the amplitude (A(n)) is less than the constant (K).

5. Method according to one of the preceding claims, where demodulation of the digital frequency-modulated signal is preceded by the following steps being performed:

- conversion of an analogue radio-frequency signal into a digital signal,

- down-conversion of the digital signal to a baseband,

- filtering of the baseband signal.

6. Circuit arrangement for digitally demodulating a frequency-modulated signal using a demodulator (4), where the demodulator (4) has an output for the digital amplitude values (A(n)) and an output for the differential phase values ($\varphi'$(n)), **characterized by**

- a delay element (5) at the output of the demodulator (4) for the digital amplitude value (A(n)),

- a comparator/multiplier element (6) having a comparator at the output of the demodulator (4) and of the delay element (5) for the purpose of comparing the present amplitude value (A(n)) with a constant (K), and having

- a multiplier for forming the product of the present amplitude value (A(n)) and a preceding amplitude value (A(n-1)), with a factor (c) being equal to the product when the present amplitude value (A(n)) is less than the constant (K), and

- a multiplier (7) for the differential phase signal ($\varphi$'(n)) with the factor (c), for the purpose of producing a demodulated output signal (MPX).

7. Circuit arrangement according to Claim 6, **characterized in that** the delay element (5) is designed such that the product of the present amplitude value (A(n)) and the immediately preceding amplitude value (A(n-1)) is formed.

8. Circuit arrangement according to Claim 7, **characterized in that** the factor (c) is equal to 1 when the present amplitude value (A(n)) is greater than or equal to the constant (K).

9. Circuit arrangement according to one of Claims 6 to 8, where a radio-frequency reception chip (1), a unit (2) having a mixer and an analogue/digital converter for digitally converting the frequency-modulated signal, and also a filter (3) for the digital frequency-modulated signal are connected upstream of the demodulator (4).

## Revendications

1. Procédé de démodulation d'un signal numérique modulé en fréquence, comprenant les étapes :

    a) démodulation du signal numérisé modulé en fréquence, l'amplitude (A(n)) et la valeur de phase différentielle ($\varphi$'(n)) du signal étant alors générées pour former des signaux de sortie,

    **caractérisé par**

    b) la comparaison de l'amplitude (A(n)) du signal démodulé avec une constante (K) à des moments de balayage (n) déterminés,
    c) la multiplication de la valeur de phase différentielle ($\varphi$'(n)) du moment de balayage respectif avec un facteur (c), le facteur (c) étant le produit de l'amplitude (A(n)) du moment de balayage déterminé et de l'amplitude (A(n-1)) d'un moment de balayage précédent lorsque l'amplitude (A(n)) est inférieure à la constante (K).

2. Procédé selon la revendication 1, **caractérisé en ce que** le facteur (c) est égal à 1 lorsque l'amplitude (A(n)) est supérieure ou égale à la constante (K).

3. Procédé selon la revendication 1 ou 2, les étapes b) et c) étant réalisées à chaque moment de balayage.

4. Procédé selon la revendication 3, **caractérisé en ce que** le facteur (c) est calculé comme produit de l'amplitude (A(n)) du moment de balayage et de l'amplitude (A(n-1)) du moment de balayage immédiatement précédent lorsque l'amplitude (A(n)) est inférieure à la constante (K).

5. Procédé selon l'une quelconque des revendications précédentes, les étapes suivantes étant réalisées avant la démodulation du signal numérique modulé en fréquence :

    - conversion d'un signal haute fréquence analogique en un signal numérique,
    - mixage du signal numérique sur une bande de base,
    - filtrage du signal de bande de base.

6. Circuit pour la démodulation numérique d'un signal modulé en fréquence avec un démodulateur (4), le démodulateur (4) présentant une sortie pour les valeurs d'amplitude numériques (A(n)) et une sortie pour les valeurs de phase différentielles ($\varphi$'(n)), **caractérisé par**

    - un temporisateur (5) à la sortie du démodulateur (4) pour la valeur d'amplitude numérique (A(n)),
    - un élément comparateur/multiplicateur (6) avec un comparateur à la sortie du démodulateur (4) et du temporisateur (5) pour comparer la valeur d'amplitude actuelle (A(n)) avec une constante (K), et comprenant
    - un multiplicateur pour former le produit de la valeur d'amplitude actuelle (A(n)) avec une valeur d'amplitude précédente (A(n-1)), un facteur (c) étant égal au produit lorsque la valeur d'amplitude actuelle (A(n)) est inférieure à la constante (K), et
    - un multiplicateur (7) pour le signal de phase différentiel ($\varphi$'(n)) avec le facteur (c) pour générer un signal de sortie démodulé (MPX).

7. Circuit selon la revendication 6,

**caractérisé en ce que**
le temporisateur (5) est configuré de telle sorte que le produit est obtenu à partir de la valeur d'amplitude actuelle (A(n)) et de la valeur d'amplitude immédiatement précédente (A(n-1)).

8. Circuit selon la revendication 7,
**caractérisé en ce que**
le facteur (c) est égal à 1 lorsque la valeur d'amplitude actuelle (A(n)) est supérieure ou égale à la constante (K).

9. Circuit selon l'une quelconque des revendications 6 à 8,
avec en amont du démodulateur (4) un module de réception haute fréquence (1), une unité (2) avec un mélangeur et un convertisseur analogique/numérique pour la conversion numérique du signal modulé en fréquence, ainsi qu'un filtre (3) pour le signal numérique modulé en fréquence.

Falls A(n)<K
c=A(n)*A(n-1)
sonst
c=1

Fig. 1